# EUROPEAN PATENT APPLICATION

(11) **EP 4 790 647 A2**
(43) Date of publication of application: **12.08.2026**
(21) Application number: 26188101.5
(22) Date of filing: 26.06.2026
(51) Int. Cl.: G06T 7/40

(54) **IMAGE NOISE LEVEL ESTIMATION METHOD, APPARATUS, READABLE STORAGE MEDIUM, AND ELECTRONIC DEVICE**

(30) Priority: 27.03.2026 CN 202610398080
(71) Applicant: XG TECH PTE. LTD., Singapore 179098 (SG)
(72) Inventor: LIN, Wei, 179098 Singapore (SG); BAI, Yulong, 179098 Singapore (SG)
(74) Representative: Patentanwälte Magenbauer & Kollegen Partnerschaft mbB

(57) **Abstract**

An image noise level estimation method includes: acquiring an original image to be subjected to noise level estimation; performing noise level estimation on the original image to obtain an initial noise level estimation map, wherein the initial noise level estimation map includes initial noise level estimation values respectively corresponding to pixel points in the original image; processing the original image using a pre-trained image texture estimation model to obtain a noise level calibration coefficient map, wherein noise level calibration coefficients in the noise level calibration coefficient map are used to reduce the noise levels of texture regions in the original image and to increase the noise levels of flat regions in the original image; and calibrating the noise levels in the initial noise level estimation map using the noise level calibration coefficients included in the noise level calibration coefficient map to obtain a calibrated noise level estimation map.

## Description

### FIELD OF THE PRESENT DISCLOSURE

The present disclosure relates to digital image processing technology and computer vision technology, and in particular to an image noise level estimation method, an apparatus, a readable storage medium, and an electronic device.

### BACKGROUND OF THE PRESENT DISCLOSURE

Noise estimation refers to the process of quantifying the noise level from a single noisy image. The goal is not to directly remove noise, but to generate a noise level estimation map of the same size as the input image, where each pixel value in the map represents the noise intensity of pixel at the corresponding position. Noise estimation methods provide key parametric basis for subsequent image de-noising and other processing.

Currently commonly used noise estimation methods have insufficient ability to distinguish image content, and tend to misidentify some texture details as noise. Moreover, in scenarios with complex textures or heavy noise, they cannot effectively distinguish between noise and actual texture, resulting in low accuracy of noise level estimation.

### SUMMARY OF THE PRESENT DISCLOSURE

To solve the above technical problems, the present disclosure provides an image noise level estimation method, an apparatus, a readable storage medium, and an electronic device, so as to solve the problem of insufficient ability to distinguish image content during image noise level estimation, which leads to low accuracy of noise estimation.

A first aspect of the embodiments of the present disclosure provides an image noise level estimation method, including: acquiring an original image to be subjected to noise level estimation; performing noise level estimation on the original image to obtain an initial noise level estimation map, wherein the initial noise level estimation map includes initial noise level estimation values respectively corresponding to pixel points in the original image; processing the original image using a pre-trained image texture estimation model to obtain a noise level calibration coefficient map, wherein the noise level calibration coefficients in the noise level calibration coefficient map are used to reduce the noise levels of texture regions in the original image and to increase the noise levels of flat regions in the original image; and calibrating the noise levels in the initial noise level estimation map using the noise level calibration coefficients included in the noise level calibration coefficient map to obtain a calibrated noise level estimation map.

A second aspect of the embodiments of the present disclosure provides an image noise level estimation apparatus, including: an acquisition module, configured to acquire an original image to be subjected to noise level estimation; a first estimation module, configured to perform noise level estimation on the original image to obtain an initial noise level estimation map, wherein the initial noise level estimation map includes initial noise level estimation values respectively corresponding to pixel points in the original image; a second estimation module, configured to process the original image using a pre-trained image texture estimation model to obtain a noise level calibration coefficient map, wherein the noise level calibration coefficients in the noise level calibration coefficient map are used to reduce the noise levels of texture regions in the original image and to increase the noise levels of flat regions in the original image; and a calibration module, configured to calibrate the noise levels in the initial noise level estimation map using the noise level calibration coefficients included in the noise level calibration coefficient map to obtain a calibrated noise level estimation map.

A third aspect of the embodiments of the present disclosure provides a computer-readable storage medium, the storage medium storing a computer program, and when the computer program is executed, it is used to implement the above-described image noise level estimation method.

A fourth aspect of the embodiments of the present disclosure provides an electronic device, the electronic device including: a processor; a memory for storing executable instructions of the processor; and the processor, configured to read the executable instructions from the memory, and execute the instructions to implement the above-described image noise level estimation method.

The image noise level estimation method, apparatus, readable storage medium, and electronic device provided by the embodiments of the present disclosure can obtain an initial noise level estimation map by performing noise level estimation on the original image, process the original image using a pre-trained image texture estimation model to obtain a noise level calibration coefficient map, and finally calibrate the noise levels in the initial noise level estimation map using the noise level calibration coefficients included in the noise level calibration coefficient map to obtain a calibrated noise level estimation map. The calibrated noise level estimation map can be used for image denoising, thereby achieving targeted noise level calibration for different regions according to the texture intensity of different regions in the image, improving the accuracy of noise level estimation, helping to accurately distinguish between noise and actual texture in the image, and further improving the precision of image denoising.

### BRIEF DESCRIPTION OF THE DRAWINGS

FIG. 1 is a schematic flowchart of an image noise level estimation method provided by an exemplary embodiment of the present disclosure;
FIG. 2 is a schematic flowchart of an image noise level estimation method provided by another exemplary embodiment of the present disclosure;
FIG. 3 is a schematic flowchart of an image noise level estimation method provided by yet another exemplary embodiment of the present disclosure;
FIG. 4 is a schematic flowchart of an image noise level estimation method provided by yet another exemplary embodiment of the present disclosure;
FIG. 5 is a schematic structural diagram of an image texture estimation model provided by an exemplary embodiment of the present disclosure;
FIG. 6 is a schematic flowchart of an image noise level estimation method provided by yet another exemplary embodiment of the present disclosure;
FIG. 7 is a schematic flowchart of a training process for an image texture estimation model provided by an exemplary embodiment of the present disclosure;
FIG. 8 is a schematic flowchart of an image noise level estimation method provided by yet another exemplary embodiment of the present disclosure;
FIG. 9 is a structural diagram of an image noise level estimation apparatus provided by an exemplary embodiment of the present disclosure;
FIG. 10 is a structural diagram of an image noise level estimation apparatus provided by another exemplary embodiment of the present disclosure;
FIG. 11 is a structural diagram of an electronic device provided by an exemplary embodiment of the present disclosure.

### DESCRIPTION OF THE EMBODIMENTS

To explain the present disclosure, exemplary embodiments of the present disclosure will be described in detail below with reference to the drawings. Obviously, the described embodiments are only a part of the embodiments of the present disclosure, rather than all of the embodiments. It should be understood that the present disclosure is not limited by the exemplary embodiments.

It should be noted that: unless otherwise specifically stated, the relative arrangement of components and steps, numerical expressions, and numerical values set forth in these embodiments do not limit the scope of the present disclosure.

### Application Overview

Related image noise estimation methods have a core idea of dividing an image into multiple image blocks and preferentially selecting those "flat blocks" with simple textures and gentle gradient changes for noise statistical analysis, based on the basic assumption that pixel variations in these regions are mainly caused by noise. However, this method has the following deficiencies:

First, the ability to distinguish image content is insufficient, and estimation accuracy is limited. Related methods rely heavily on correctly screening "flat regions." However, in complex natural images, texture regions and noise-contaminated flat regions may have very similar local statistical characteristics, making it difficult to distinguish them precisely. Once an image block containing fine textures is misjudged as a flat region, image details will be mistaken for noise, thereby overestimating the noise level; conversely, if a truly flat region is not identified, the noise level will be underestimated. This inherent uncertainty makes it difficult to guarantee the accuracy and stability of noise estimation results.

Second, there is a lack of consideration for human visual characteristics. Related techniques typically assume that noise is uniformly distributed in image space and aim to estimate a globally uniform noise level. However, the human visual system perceives noise non-uniformly across different regions of an image, i.e., the human eye is very sensitive to noise in flat regions (such as sky and walls) but insensitive to noise in complex texture regions (such as grass and bushes). Related methods cannot reflect this important perceptual difference, and their estimation results fail to provide guidance for subsequent denoising processing that conforms to human subjective quality perception.

Finally, its performance is unstable in scenarios with heavy noise pollution or complex textures. When the image noise is strong, the noise masks the original structural and textural information of the image, making it extremely difficult to accurately identify flat regions, resulting in a failure of block screening-based methods. Furthermore, for images with extremely rich texture details, the available flat regions are too few, which also leads to insufficient samples for statistical estimation, ultimately resulting in a significant decrease in the reliability of noise estimation values.

In summary, related techniques have failed to effectively resolve the inherent contradiction between image content complexity, human visual system characteristics, and noise spatial variability.

The embodiments of the present disclosure aim to solve the above problems. The noise estimation process is not invariably applied to the entire image, but is adaptively adjusted according to the semantic content (such as texture, edges, flat regions) of different regions of the image. By performing texture estimation on the original image to obtain a noise level calibration coefficient map, the noise level calibration coefficient map is used to calibrate the initial noise level estimation map. This process introduces prior knowledge of the human visual system: the human eye is more sensitive to noise in flat regions (such as sky and walls) and insensitive to noise in texture regions (such as grass and fabric). Therefore, using the calibrated noise level estimation map for denoising can determine which regions noise should be more aggressively suppressed (flat regions) and which regions processing should be conservative to preserve more details (texture regions).

### Exemplary Methods

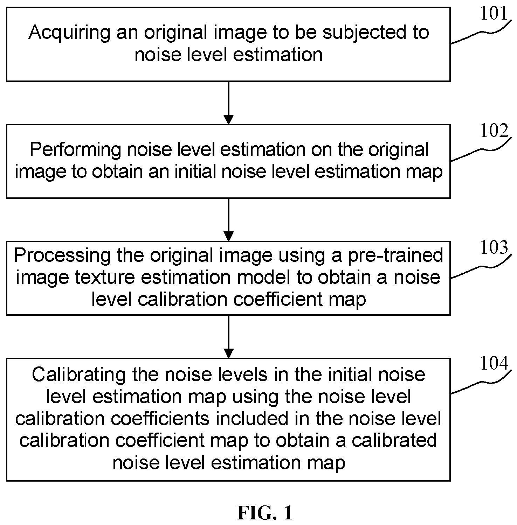

FIG. 1 is a schematic flowchart of an image noise level estimation method provided by an exemplary embodiment of the present disclosure. This embodiment can be applied to various types of electronic devices. As shown in FIG. 1, the method includes the following steps:
Step 101: Acquiring an original image to be subjected to noise level estimation.

The above-mentioned original image may be an image captured in any scenario, for example, an image captured by a camera on a vehicle, an image captured by a user using a mobile phone, etc.

Step 102: Performing noise level estimation on the original image to obtain an initial noise level estimation map.

The initial noise level estimation map includes initial noise level estimation values respectively corresponding to the pixel points in the original image, i.e., the size of the initial noise level estimation map is the same as the size of the original image, where each initial noise level estimation value corresponds to a pixel in the original image and represents the noise level of the corresponding pixel point. Generally, a higher noise level indicates a higher probability that the corresponding pixel point contains noise.

The electronic device executing this method can perform this step using various related noise level estimation methods. Optionally, an image block-based noise estimation methods (e.g., block-based methods using local variance statistics, block-based methods using texture complexity screening) may be used to perform noise level estimation on the original image.

Step 103: Processing the original image using a pre-trained image texture estimation model to obtain a noise level calibration coefficient map.

The noise level calibration coefficients in the noise level calibration coefficient map are used to reduce the noise levels of texture regions in the original image and to increase the noise levels of flat regions in the original image.

The above-mentioned image texture estimation model is used to represent the correspondence between the original image and the noise level calibration coefficient map. The image texture estimation model may be constructed in various ways, for example, by establishing a correspondence table, or by training a neural network model using machine learning methods.

Optionally, when training the image texture estimation model using machine learning methods, a large number of sample images may be collected in advance, and a noise level calibration coefficient may be annotated for each pixel in each sample image. The parameters of the initial model are then iteratively adjusted so that the error between the predicted noise level calibration coefficients output by the model and the annotated noise level calibration coefficients gradually decreases. When the error converges, the current initial model is used as the trained image texture estimation model.

Optionally, the image texture estimation model may also be used to perform texture probability estimation on the original image to obtain a texture probability estimation map, and then the texture probability estimation values included in the texture probability estimation map are converted to obtain the noise level calibration coefficient map.

Step 104: Calibrating the noise levels in the initial noise level estimation map using the noise level calibration coefficients included in the noise level calibration coefficient map to obtain a calibrated noise level estimation map.

Since the noise level calibration coefficients included in the noise level calibration coefficient map and the initial noise level estimation values included in the initial noise level estimation map have a one-to-one correspondence, for any initial noise level estimation value, a calibrated noise level estimation value can be obtained by calculation based on the corresponding noise level calibration coefficient.

Optionally, the initial noise level estimation values respectively corresponding to the pixel points in the initial noise level estimation map may be multiplied point-wise with the noise level calibration coefficients respectively corresponding to the pixel points in the noise level calibration coefficient map to obtain the calibrated noise level estimation map. The mathematical expression can be: N2 = N1 * α_map, where N1 represents the initial noise level estimation map, N2 represents the calibrated noise level estimation map, and α_map is the noise level calibration coefficient map. N1, N2, and α_map have the same resolution. Calibrating the initial noise level estimation map by point-wise multiplication can make the calibration process more concise and improve the efficiency of noise level estimation.

Optionally, the noise level estimation values obtained by calculation may be further processed (e.g., filtered) on the basis of the above point-wise multiplication result to obtain the calibrated noise level estimation map.

Generally, after obtaining the noise level estimation map, the noise level estimation map can be used for denoising (e.g., using an adaptive denoising algorithm for denoising). During the denoising process, denoising of corresponding intensity can be performed based on the noise level estimation values included in the noise level estimation map, i.e., the larger the noise level estimation value, the greater the denoising intensity. In the embodiments of the present disclosure, since the noise level estimation values are related to texture probability, i.e., the noise level estimation values corresponding to texture regions are lower compared to traditional denoising methods, the denoising intensity for texture regions becomes smaller, and the denoising intensity for flat regions is greater.

The image noise level estimation method provided by the embodiments of the present disclosure obtain an initial noise level estimation map by performing noise level estimation on the original image, processes the original image using a pre-trained image texture estimation model to obtain a noise level calibration coefficient map, and finally calibrates the noise levels in the initial noise level estimation map using the noise level calibration coefficients included in the noise level calibration coefficient map to obtain a calibrated noise level estimation map. The calibrated noise level estimation map can be used for image denoising, thereby achieving targeted noise level calibration for different regions according to the texture intensity of different regions in the image, improving the accuracy of noise level estimation, helping to accurately distinguish between noise and actual texture in the image, and further improving the precision of image denoising processing.

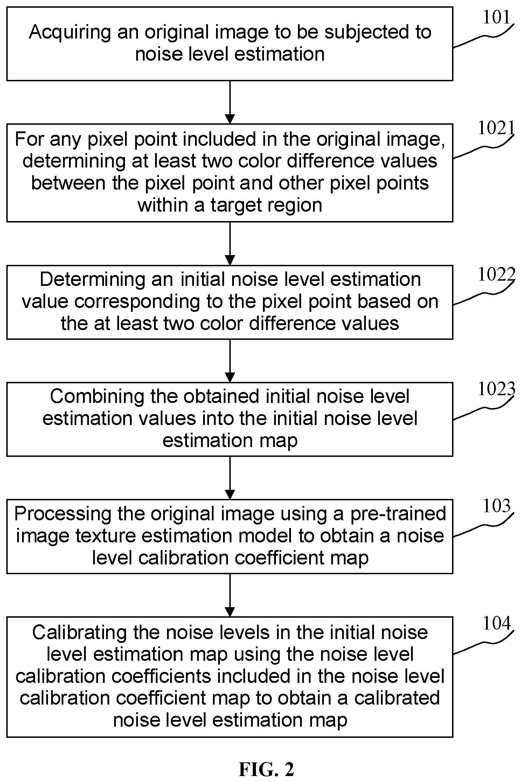

In some optional implementations, as shown in FIG. 2, the above Step 102 includes:

Step 1021: For any pixel point included in the original image, determining at least two color difference values between the pixel point and other pixel points within a target region.

The target region is an image region of a preset size centered on the pixel point as a reference point. The position of the reference point for each image region may be arbitrarily specified; typically, the reference point may be the center point of the image region. The above preset size may be arbitrarily set, for example, an image block composed of 31×31 pixels.

For any pixel included in the original image, the number of color difference values calculated based on the pixel point is at least two. For example, the color difference value between the pixel point and each pixel point in the target region may be calculated, or a preset number of pixel points may be selected for calculation of color difference values. The algorithm for calculating color difference values may be arbitrarily set; for example, the difference between color values of two pixels may be calculated as the color difference value, or the block pixel value difference may be calculated as the color difference value according to the method provided by the following embodiment.

In addition, the data used for calculating color difference values are typically grayscale values of the pixels. Optionally, the color difference values may also be calculated based on various color components of the pixels (e.g., calculated using the average value of RGB color components, etc.).

It should be understood that the preset size is the maximum size of each image region. In the boundary and corner regions of the original image, since the number of pixels around the reference point does not satisfy the number of pixels specified by the above preset size, the size of the image region corresponding to the reference point may be smaller than the preset size.

Step 1022: Determining an initial noise level estimation value corresponding to the pixel point based on the at least two color difference values.

After obtaining at least two color difference values corresponding to each pixel, the initial noise level estimation value corresponding to the pixel point may be determined in various ways. For example, the minimum value or average value among the at least two color difference values may be used as the initial noise level estimation value.

Step 1023: Combining the obtained initial noise level estimation values into the initial noise level estimation map.

This embodiment calculates the color difference values between each pixel in the original image and other surrounding pixels using a search window approach, and the initial noise level estimation values can be quickly obtained from the color difference values. The obtained initial noise level estimation map can preliminarily reflect the noise characteristics of the original image, facilitating efficient execution of subsequent noise level calibration.

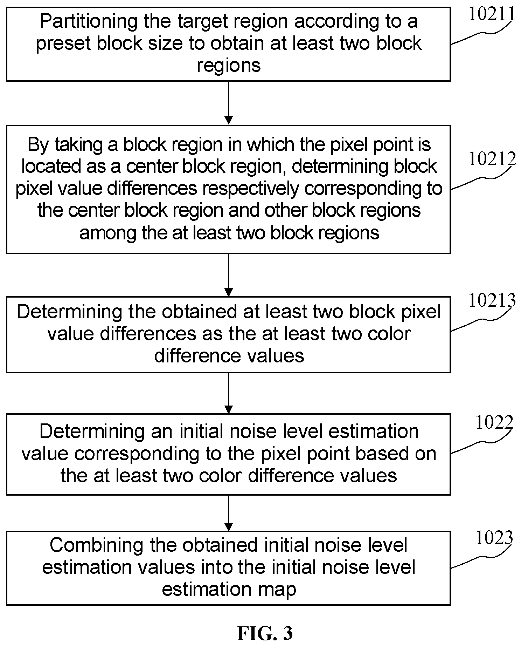

In some optional implementations, as shown in FIG. 3, the above Step 1021 includes:

Step 10211: Partitioning the target region according to a preset block size to obtain at least two block regions.

The block size may be arbitrarily set, for example, 9×9 pixels. In this embodiment, the target region may be divided into at least two non-overlapping block regions, or the target region may be divided into at least two block regions with overlapping regions in a sliding window manner.

Step 10212: By taking a block region in which the pixel point is located as a center block region, determining block pixel value differences respectively corresponding to the center block region and other block regions among the at least two block regions.

The block pixel value differences may be calculated using various algorithms for computing similarity between image blocks. For example, the block pixel value difference may be the L1 distance, L2 distance, etc. between the central block region and other block regions.

Step 10213: Determining the obtained at least two block pixel value differences as the at least two color difference values.

This embodiment partitions the target region of each pixel point in the original image into blocks and calculates the block pixel value differences between block regions as color difference values, which enables the color difference values to reflect local texture features of the image, helps to improve the adaptability of noise level estimation, and can reduce the amount of data computation and improve computational efficiency.

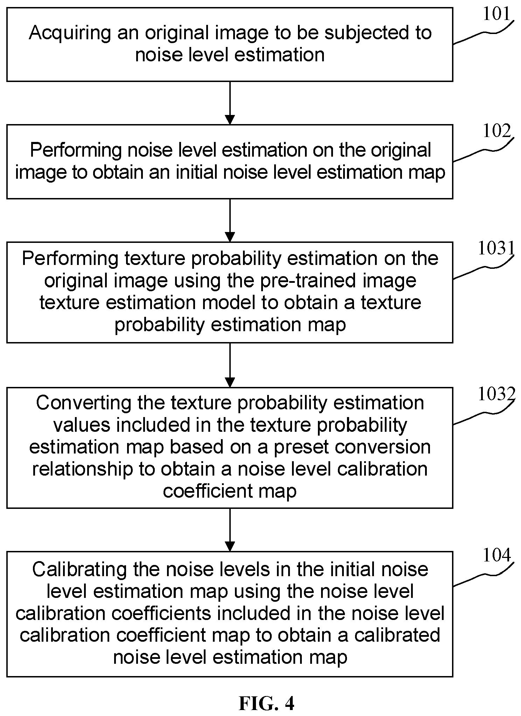

In some optional implementations, as shown in FIG. 4, the above Step 103 includes:

Step 1031: Performing texture probability estimation on the original image using the pre-trained image texture estimation model to obtain a texture probability estimation map.

Wherein, the texture probability estimation values included in the texture probability estimation map correspond one-to-one with the pixels included in the original image. A texture probability estimation value represents the probability that the corresponding pixel is located in a texture region; a larger texture probability estimation value indicates a higher possibility that the corresponding pixel is located in a texture region, and a smaller texture probability estimation value indicates a higher possibility that the corresponding pixel point is located in a flat region.

The above-mentioned image texture estimation model may be pre-trained using machine learning methods. For example, a large number of sample images may be collected in advance, and a texture probability value may be annotated for each pixel in each sample image. The parameters of the initial model are then iteratively adjusted so that the error between the predicted texture probability estimation map output by the model and the annotated texture probability estimation map gradually decreases. When the error converges, the current initial model is used as the trained image texture estimation model.

Step 1032: Converting the texture probability estimation values included in the texture probability estimation map based on a preset conversion relationship to obtain a noise level calibration coefficient map.

The above conversion relationship may be preset. The conversion relationship may be embodied in the form of a calculation formula, a correspondence table, etc. By using the conversion relationship, each texture probability estimation value can be converted into a noise level calibration coefficient. The obtained noise level calibration coefficients are combined into a noise level calibration coefficient map.

Generally, the relationship between the texture probability estimation value and the noise level calibration coefficient may be an inverse relationship, i.e., a larger texture probability estimation value indicates a higher probability that the corresponding pixel belongs to a texture region, and the corresponding noise level calibration coefficient is smaller, which serves to weaken the noise level and avoid the actual texture being mistakenly identified as noise and removed during subsequent denoising processing; a smaller texture probability estimation value indicates a lower probability that the corresponding pixel belongs to a texture region, and the corresponding noise level calibration coefficient is larger, which serves to enhance the noise level, so that high-intensity denoising is performed on flat regions during subsequent denoising processing.

This embodiment uses the image texture estimation model to perform texture probability estimation on the original image, and then converts the texture probability estimation values to obtain the noise level calibration coefficient map, thereby achieving targeted determination of the corresponding noise level calibration coefficients based on the texture probabilities of each region in the image, which helps to improve the accuracy of generating the noise level calibration coefficient map.

In some optional implementations, the above Step 1032 may include:

Mapping the texture probability estimation values included in the texture probability estimation map to noise level calibration coefficients using a preset mapping function, to obtain the noise level calibration coefficient map.

The mapping function may reflect the relationship between the texture probability estimation values and the noise level calibration coefficients. The form of the mapping function may be arbitrarily set; typically, the setting goal of the mapping function is to make the noise level calibration coefficients for texture regions smaller and the noise level calibration coefficients for flat regions larger.

This embodiment can map any texture probability estimation value to a noise level calibration coefficient in a targeted manner by setting a mapping function, thereby making the noise level calibration coefficient corresponding to each pixel more accurate.

In some optional implementations, the mapping function is a monotonically decreasing mapping function.

The noise level calibration coefficient map may be calculated according to the following steps:

For any texture probability estimation value included in the texture probability estimation map, using the monotonically decreasing mapping function, mapping the texture probability estimation value to a first noise level calibration coefficient when the texture probability estimation value indicates that a corresponding pixel point is located in a texture region; and mapping the texture probability estimation value to a second noise level calibration coefficient when the texture probability estimation value indicates that a corresponding pixel is located in a flat region.

Wherein, the first noise level calibration coefficient is smaller than the second noise level calibration coefficient.

The form of the monotonically decreasing mapping function may be arbitrarily set. As an example, the monotonically decreasing mapping function may be α = a - β * p, where a and β are adjustable hyperparameters greater than 0, and p is the texture probability estimation value. The meaning of this function is as follows: when p corresponding to a certain pixel is close to 1, it indicates that the pixel is located in a texture region, and the corresponding α is close to a - β, which serves to weaken the noise level; when p is close to 0, it indicates that the pixel is located in a flat region, and the corresponding α is close to a, which serves to maintain or enhance the noise level.

This embodiment enables texture regions and flat regions to respectively correspond to noise level calibration coefficients of different magnitudes by setting a monotonically decreasing mapping function that, resulting in higher precision of image noise level estimation, which helps to perform denoising of different intensities for texture regions and flat regions, further improving the accuracy of image denoising.

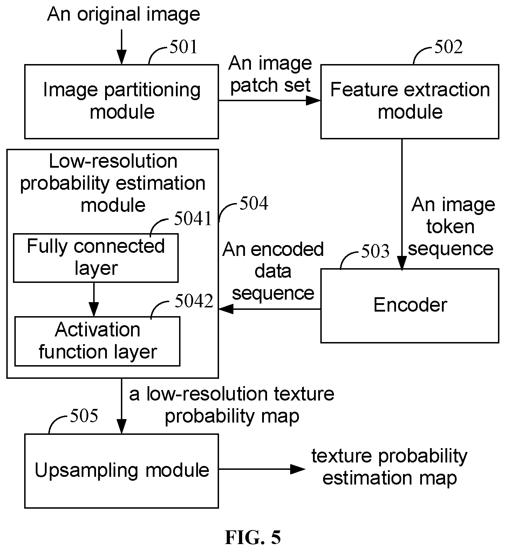

In some optional implementations, as shown in FIG. 5, the image texture estimation model includes an image partitioning module 501, a feature extraction module 502, an encoder 503, a low-resolution probability estimation module 504, and an upsampling module 505.

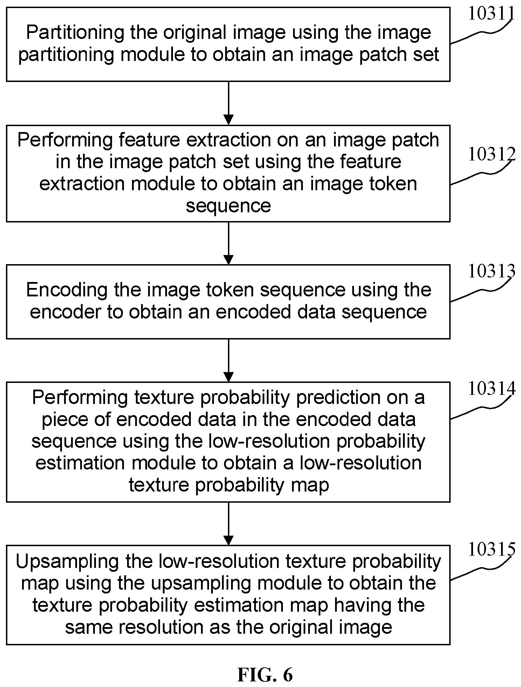

As shown in FIG. 6, Step 1031 includes:
Step 10311: Partitioning the original image using the image partitioning module to obtain an image patch set.

This embodiment does not limit the manner of partitioning the image. For example, a convolutional layer with a kernel size and stride both equal to P (e.g., 16) may be used as the image partitioning module to perform convolution on the input original image, thereby dividing the image into multiple non-overlapping P × P sized image patches.

Step 10312: Performing feature extraction on an image patch in the image patch set using the feature extraction module to obtain an image token sequence.

Wherein, the image token in the image token sequence corresponds to one image patch.

The feature extraction module may be implemented by a learnable linear projection layer. It may flatten each image patch into a vector and map the vector to a fixed-dimensional embedding space through a linear projection layer (typically a fully connected layer). For example, each image token in the image token sequence is a feature vector of size 1×C, where C is the feature dimension. The image token sequence may form a feature map of size (H/P)×(W/P)×C, where H and W are the height and width of the original image.

Step 10313: Encoding the image token sequence using the encoder to obtain an encoded data sequence.

Each piece of encoded data in the encoded data sequence is obtained by the encoder encoding the corresponding image token. Optionally, the encoder may be a deformable Transformer encoder. The above token sequence is input into a deformable Transformer encoder stacked with multiple (e.g., 2 to 4) encoding blocks. The deformable self-attention mechanism of the encoder allows the model to dynamically attend to other blocks that are most relevant to the content of the current image block, thereby more effectively capturing global context information, which is beneficial for accurately determining whether an image block belongs to a texture region or a flat region.

Step 10314: Performing texture probability prediction on a piece of encoded data in the encoded data sequence using the low-resolution probability estimation module to obtain a low-resolution texture probability map.

Specifically, the piece of encoded data in the encoded data sequence may be input into the low-resolution probability estimation module, and the low-resolution probability estimation module performs texture probability prediction on each piece of encoded data respectively to obtain a texture probability value corresponding to each piece of encoded data. Each texture probability value constitutes a low-resolution texture probability map. The size of the low-resolution texture probability map is (H/P)×(W/P), where the value of each point on the map is between 0 and 1, representing the probability that each image patch included in the original image belongs to a texture region.

Step 10315: Upsampling the low-resolution texture probability map using the upsampling module to obtain the texture probability estimation map having the same resolution as the original image.

The upsampling module may be implemented based on related interpolation algorithms. For example, a bilinear interpolation algorithm may be used to upsample the low-resolution texture probability map P_low to the full resolution H×W of the original image to obtain a full-resolution texture probability estimation map P_full. The bilinear interpolation algorithm can produce smooth transitions, effectively avoiding block artifacts in the final noise level calibration coefficient map.

This embodiment constructs the image texture estimation model by setting a feature extraction module, an encoder, a low-resolution probability estimation module, and an upsampling module, thereby achieving texture probability estimation based on a deep learning model and effectively improving the accuracy of texture probability estimation.

In some optional implementations, as shown in FIG. 5, the low-resolution probability estimation module 504 includes a fully connected layer 5041 and an activation function layer 5042.

The above Step 10314 may be executed as follows:
First, using the fully connected layer, each piece of encoded data in the encoded data sequence is mapped to a texture feature estimation value.

Then, using the activation function layer, the obtained texture feature estimation values are respectively converted into low-resolution texture probabilities to obtain the low-resolution texture probability map.

The function of the above fully connected layer is to integrate the features extracted by the preceding layers of the image texture estimation model and to output data for classification. The type of activation function used by the above activation function layer is typically a sigmoid activation function; optionally, other activation functions may also be used, such as a tanh activation function, etc. The function of the activation function layer is to perform binary classification on the texture feature estimation values and output a probability indicating that the corresponding image region is a texture region.

This embodiment achieves accurate texture probability prediction for each piece of encoded data by setting a fully connected layer and an activation function layer in the low-resolution probability estimation module, thereby improving the accuracy of generating the texture probability estimation map.

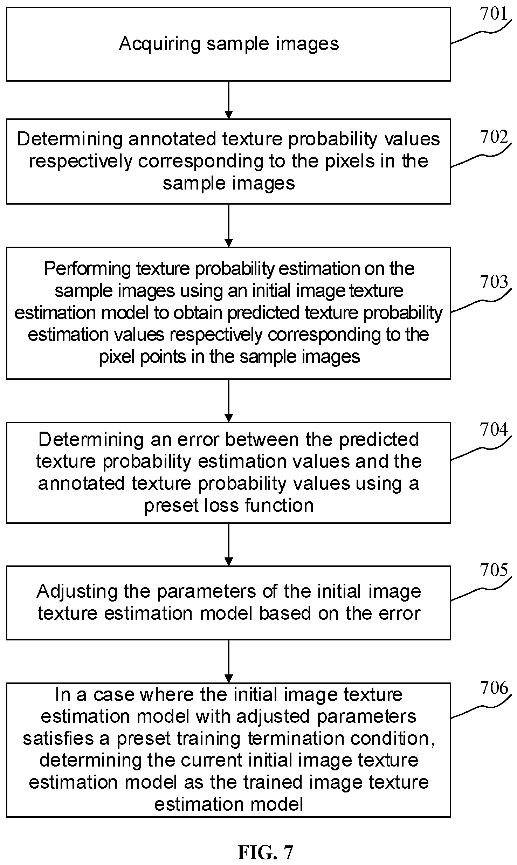

In some optional implementations, as shown in FIG. 7, the image texture estimation model is pre-trained according to the following steps:
Step 701: Acquiring sample images.

The sample images may be images captured in advance for a certain type of scenario. The application scenario of the image noise level estimation method provided by the embodiments of the present disclosure belongs to this type of scenario.

Step 702: Determining annotated texture probability values respectively corresponding to the pixels in the sample images.

The annotated texture probability values are labels between 0 and 1 that are annotated for each pixel in advance by human operators. Typically, to improve annotation efficiency, the sample images may be divided into blocks, with each block having a size of P×P. Annotators may annotate each image block with a label between 0 and 1. The resulting labels form a (H/P)×(W/P) matrix, where each value in the matrix represents the probability that the corresponding region belongs to a texture region.

Step 703: Performing texture probability estimation on the sample images using an initial image texture estimation model to obtain predicted texture probability estimation values respectively corresponding to the pixel points in the sample images.

The structure of the initial image texture estimation model may be constructed using various related neural network models; for example, it may have the structure shown in FIG. 5. The initial image texture estimation model may perform texture probability estimation on the sample images according to the process shown in FIG. 6.

Step 704: Determining an error between the predicted texture probability estimation values and the annotated texture probability values using a preset loss function.

The loss function may be various types of related loss functions, for example, an L1 loss function, where the loss value is the Mean Absolute Error between the network-predicted texture probability values and the real labels. This loss function is insensitive to outliers, making training more stable.

Step 705: Adjusting the parameters of the initial image texture estimation model based on the error.

Typically, gradient descent method and backpropagation method may be employed to iteratively adjust the parameters of the initial image texture estimation model until the model satisfies the training termination condition.

Step 706: In a case where the initial image texture estimation model with adjusted parameters satisfies a preset training termination condition, determining the current initial image texture estimation model as the trained image texture estimation model.

Optionally, the above training termination condition may include at least one of the following: convergence of the loss value, the number of training iterations reaching a preset number, the training duration reaching a preset duration, etc.

The training method for the image texture estimation model provided by this embodiment can adapt the model training process to the actual application scenario, thereby improving the accuracy of the model in performing texture probability estimation.

In some optional implementations, the above Step 702 may be executed as follows:

First, the sample images are partitioned into blocks to obtain a sample block region set.

Then, for any sample block region in the sample block region set, a ratio of a texture region area in the sample block region to the sample block region is determined, and the ratio is determined as the annotated texture probability value of the pixel points included in the sample block region.

The texture region in any sample block region may be delineated manually or automatically by other texture recognition models.

This embodiment achieves the use of the proportion of texture region area as the annotated texture probability value when annotating sample images, which simplifies the annotation process and improves annotation efficiency and model training efficiency.

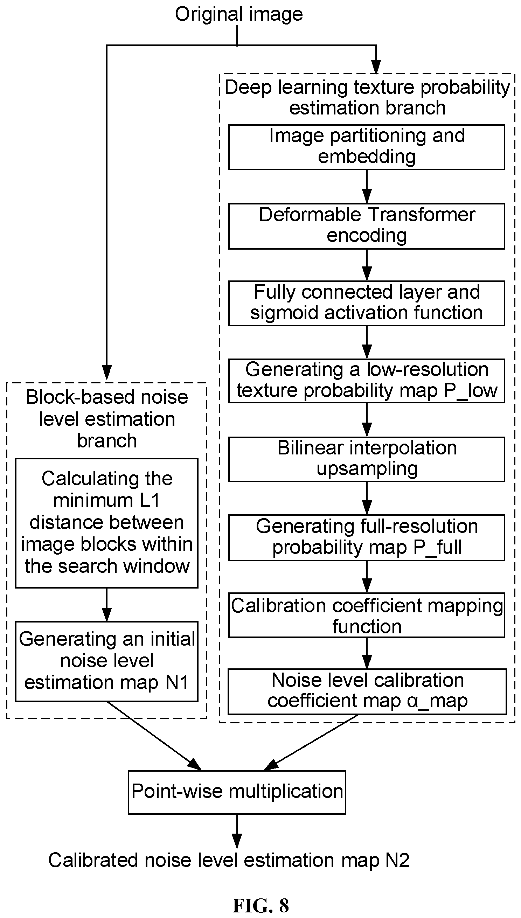

In combination with the above embodiments, FIG. 8 shows an exemplary flowchart provided by the embodiments of the present disclosure. The flowchart contains two main branches: a block-based noise level estimation branch and a deep learning texture probability estimation branch. The block-based noise level estimation branch generates an initial noise level estimation map N1 by calculating the minimum L1 distance between image blocks within the search window (refer to the embodiments corresponding to FIG. 3 and FIG. 4 above). The deep learning texture probability estimation branch sequentially generates a low-resolution texture probability map P_low by image partitioning and embedding, deformable Transformer encoding, a fully connected layer, and a sigmoid activation function. Then, through bilinear interpolation upsampling, a full-resolution probability map P_full is generated, and the full-resolution probability map P_full is mapped to a noise level calibration coefficient map α_map using a calibration coefficient mapping function. Finally, the initial noise level estimation map N1 output by the block-based noise level estimation branch and the noise level calibration coefficient map α_map output by the deep learning texture probability estimation branch are subjected to point-wise multiplication to obtain the final calibrated noise level estimation map N2.

### Exemplary Apparatus

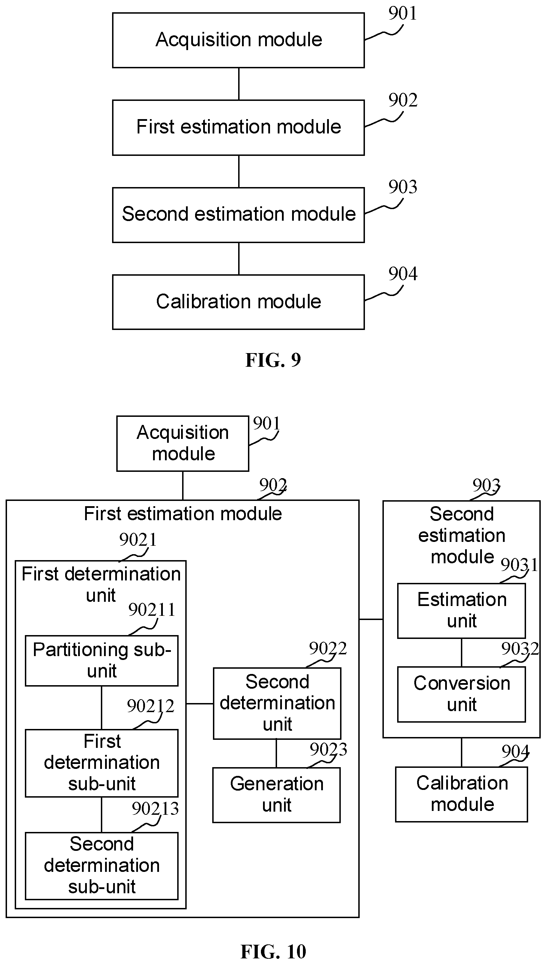

FIG. 9 is a schematic structural diagram of an image noise level estimation apparatus provided by an exemplary embodiment of the present disclosure. This embodiment can be applied to an electronic device. As shown in FIG. 9, the image noise level estimation apparatus includes:
an acquisition module 901, configured to acquire an original image to be subjected to noise level estimation;
a first estimation module 902, configured to perform noise level estimation on the original image to obtain an initial noise level estimation map, wherein the initial noise level estimation map includes initial noise level estimation values respectively corresponding to pixel points in the original image;
a second estimation module 903, configured to process the original image using a pre-trained image texture estimation model to obtain a noise level calibration coefficient map, wherein the noise level calibration coefficients in the noise level calibration coefficient map are used to reduce the noise levels of texture regions in the original image and to increase the noise levels of flat regions in the original image; and
a calibration module 904, configured to calibrate the noise levels in the initial noise level estimation map using the noise level calibration coefficients included in the noise level calibration coefficient map to obtain a calibrated noise level estimation map.

Referring to FIG. 10, FIG. 10 is a schematic structural diagram of an image noise level estimation apparatus provided by another exemplary embodiment of the present disclosure.

In some optional implementations, the second estimation module 903 includes: an estimation unit 9031, configured to perform texture probability estimation on the original image using the pre-trained image texture estimation model to obtain a texture probability estimation map, wherein the texture probability estimation values included in the texture probability estimation map correspond one-to-one with the pixel points included in the original image; and a conversion unit 9032, configured to convert the texture probability estimation values included in the texture probability estimation map based on a preset conversion relationship to obtain a noise level calibration coefficient map.

In some optional implementations, the first estimation module 902 includes: a first determination unit 9021, configured to, for any pixel point included in the original image, determine at least two color difference values between the pixel point and other pixel points within a target region, wherein the target region is an image region of a preset size centered on the pixel point as a reference point; a second determination unit 9022, configured to determine an initial noise level estimation value corresponding to the pixel point based on the at least two color difference values; and a generation unit 9023, configured to combine the obtained initial noise level estimation values into the initial noise level estimation map.

In some optional implementations, the first determination unit 9021 includes: a partitioning sub-unit 90211, configured to partition the target region according to a preset block size to obtain at least two block regions; a first determination sub-unit 90212, configured to take the block region in which the pixel point is located as a central block region and determine block pixel value differences respectively corresponding to the central block region and other block regions among the at least two block regions; and a second determination sub-unit 90213, configured to determine the obtained at least two block pixel value differences as the at least two color difference values.

In some optional implementations, the conversion unit 9032 is further configured to: map the texture probability estimation values included in the texture probability estimation map to noise level calibration coefficients using a preset mapping function, to obtain the noise level calibration coefficient map.

In some optional implementations, the mapping function is a monotonically decreasing mapping function; the conversion unit 9032 is further configured to: for any texture probability estimation value included in the texture probability estimation map, use the monotonically decreasing mapping function, map the texture probability estimation value to a first noise level calibration coefficient when the texture probability estimation value indicates that a corresponding pixel point is located in a texture region; and map the texture probability estimation value to a second noise level calibration coefficient when the texture probability estimation value indicates that a corresponding pixel point is located in a flat region, wherein the first noise level calibration coefficient is smaller than the second noise level calibration coefficient.

In some optional implementations, the image texture estimation model includes an image partitioning module, a feature extraction module, an encoder, a low-resolution probability estimation module, and an upsampling module; the estimation unit 9031 is further configured to: partition the original image using the image partitioning module to obtain an image patch set; perform feature extraction on each image patch in the image patch set using the feature extraction module to obtain an image token sequence, wherein each image token in the image token sequence respectively corresponds to one image patch; encode the image token sequence using the encoder to obtain an encoded data sequence; perform texture probability prediction on each piece of encoded data in the encoded data sequence using the low-resolution probability estimation module to obtain a low-resolution texture probability map; and upsample the low-resolution texture probability map using the upsampling module to obtain the texture probability estimation map having the same resolution as the original image.

In some optional implementations, the low-resolution probability estimation module includes a fully connected layer and an activation function layer; the estimation unit 9031 is further configured to: map each piece of encoded data in the encoded data sequence to a texture feature estimation value using the fully connected layer; and convert the obtained texture feature estimation values into low-resolution texture probabilities using the activation function layer to obtain the low-resolution texture probability map.

In some optional implementations, the calibration module 904 is further configured to: perform point-wise multiplication of the initial noise level estimation values respectively corresponding to the pixel points in the initial noise level estimation map with the noise level calibration coefficients respectively corresponding to the pixel points in the noise level calibration coefficient map to obtain the calibrated noise level estimation map.

In some optional implementations, the image texture estimation model is pre-trained according to the following steps: acquiring sample images; determining annotated texture probability values respectively corresponding to the pixel points in the sample images; performing texture probability estimation on the sample images using an initial image texture estimation model to obtain predicted texture probability estimation values respectively corresponding to the pixel points in the sample images; determining an error between the predicted texture probability estimation values and the annotated texture probability values using a preset loss function; adjusting the parameters of the initial image texture estimation model based on the error; and in a case where the initial image texture estimation model with adjusted parameters satisfies a preset training termination condition, determining the current initial image texture estimation model as the trained image texture estimation model.

In some optional implementations, said determining annotated texture probability values respectively corresponding to the pixel points in the sample images includes: partitioning the sample images into blocks to obtain a sample block region set; and for any sample block region in the sample block region set, determining a ratio of a texture region area in the sample block region to the sample block region, and determining the ratio as the annotated texture probability value of the pixel points included in the sample block region.

The apparatus exemplary embodiments and the above exemplary method section correspond to each other in implementation, and the corresponding content therebetween may be mutually referenced, combined, and cited, which will not be repeated herein. The beneficial technical effects corresponding to the apparatus exemplary embodiments may refer to the corresponding beneficial technical effects in the above exemplary method section, which will not be repeated herein.

### Exemplary Electronic Device

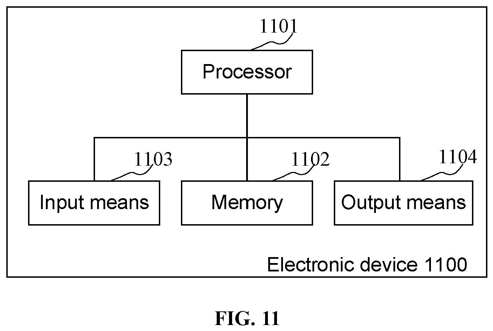

FIG. 11 is a structural diagram of an electronic device 1100 provided by the embodiments of the present disclosure, including at least one processor 1101 and a memory 1102.

The processor 1101 may be a Central Processing Unit (CPU) or other form of processing unit having data processing capabilities and/or instruction execution capabilities, and may control other components in the electronic device 1100 to perform desired functions.

The memory 1102 may include one or more computer program products, and the computer program products may include various forms of computer-readable storage media, such as volatile memory and/or non-volatile memory. The volatile memory may include, for example, Random Access Memory (RAM) and/or cache, etc. The non-volatile memory may include, for example, Read Only Memory (ROM), hard disk, flash memory, etc. One or more computer program instructions may be stored on the computer-readable storage medium, and the processor 1101 may run the one or more computer program instructions to implement the image noise level estimation methods of the various embodiments of the present disclosure described above and/or other desired functions.

In one example, the electronic device 1100 may further include: an input means 1103 and an output means 1104, which are interconnected through a bus system and/or other forms of connection mechanisms (not shown).

The input means 1103 may further include, for example, a keyboard, a mouse, etc.

The output means 1104 may output various information to the outside, and may include, for example, a display, a speaker, a printer, and a communication network and remote output devices connected thereto, etc.

Of course, for simplicity, only some of the components in the electronic device 1100 that are relevant to the present disclosure are shown in FIG. 11, with components such as buses, input/output interfaces, etc. being omitted. In addition, depending on the specific application, the electronic device 1100 may also include any other suitable components.

### Exemplary Computer Program Product and Computer-Readable Storage Medium

In addition to the above methods and devices, the embodiments of the present disclosure may also provide a computer program product, including computer program instructions that, when run by a processor, cause the processor to execute the steps of the image noise level estimation methods of the various embodiments of the present disclosure described in the above "Exemplary Methods" section.

The computer program product may write program code for executing operations of the embodiments of the present disclosure in any combination of one or more programming languages, the programming languages including object-oriented programming languages, such as Java, C++, etc., as well as conventional procedural programming languages, such as "C" language or similar programming languages. The program code may be executed entirely on a user computing device, partly on a user device, as a stand-alone software package, partly on a user computing device and partly on a remote computing device, or entirely on a remote computing device or server.

Furthermore, the embodiments of the present disclosure may also be a computer-readable storage medium having computer program instructions stored thereon, which, when run by a processor, cause the processor to execute the steps of the image noise level estimation methods of the various embodiments of the present disclosure described in the above "Exemplary Methods" section.

The computer-readable storage medium may employ any combination of one or more readable media. The readable medium may be a readable signal medium or a readable storage medium. The readable storage medium may include, for example but is not limited to, an electrical, magnetic, optical, electromagnetic, infrared, or semiconductor system, apparatus, or device, or any combination thereof. More specific examples (a non-exhaustive list) of the readable storage medium include: an electrical connection having one or more wires, a portable disk, a hard disk, Random Access Memory (RAM), Read Only Memory (ROM), Erasable Programmable Read Only Memory (EPROM or flash memory), optical fiber, Portable Compact Disc Read Only Memory (CD-ROM), an optical storage device, a magnetic storage device, or any suitable combination thereof.

The basic principles of the present disclosure have been described above in conjunction with specific embodiments; however, the advantages, effects, etc. mentioned in the present disclosure are merely examples and not limitations, and should not be considered as necessarily possessed by each of the embodiments of the present disclosure. Furthermore, the specific details disclosed above are only for the purposes of example and ease of understanding, and are not limitations; the above details do not limit the present disclosure to necessarily adopting the above specific details for implementation.

Those skilled in the art may make various modifications and variations to the present disclosure without departing from the spirit and scope of the present application. Thus, if such modifications and variations of the present application fall within the scope of the claims of the present disclosure and their equivalent technologies, the present disclosure is also intended to encompass these modifications and variations.

## Claims

1. An image noise level estimation method, comprising:
acquiring an original image to be subjected to noise level estimation;
performing noise level estimation on the original image to obtain an initial noise level estimation map, wherein the initial noise level estimation map includes initial noise level estimation values respectively corresponding to pixel points in the original image;
processing the original image using a pre-trained image texture estimation model to obtain a noise level calibration coefficient map, wherein noise level calibration coefficients in the noise level calibration coefficient map are used to reduce the noise levels of texture regions in the original image and to increase the noise levels of flat regions in the original image; and
calibrating the noise levels in the initial noise level estimation map using the noise level calibration coefficients included in the noise level calibration coefficient map to obtain a calibrated noise level estimation map.

2. The method according to claim 1, wherein said calibrating the noise levels in the initial noise level estimation map using the noise level calibration coefficients included in the noise level calibration coefficient map to obtain a calibrated noise level estimation map comprises:
performing point-wise multiplication of the initial noise level estimation values respectively corresponding to the pixel points in the initial noise level estimation map with the noise level calibration coefficients respectively corresponding to the pixel points in the noise level calibration coefficient map, to obtain the calibrated noise level estimation map.

3. The method according to claim 1, wherein said performing noise level estimation on the original image to obtain an initial noise level estimation map comprises:
for any pixel point included in the original image, determining at least two color difference values between the pixel point and other pixel points within a target region, wherein the target region is an image region of a preset size centered on the pixel point as a reference point;
determining an initial noise level estimation value corresponding to the pixel based on the at least two color difference values; and
combining the obtained initial noise level estimation values into the initial noise level estimation map.

4. The method according to claim 3, wherein said determining at least two color difference values between the pixel point and other pixel points within a target region comprises:
partitioning the target region according to a preset block size to obtain at least two block regions;
by taking a block region in which the pixel point is located as a central block region, determining block pixel value differences respectively corresponding to the central block region and other block regions among the at least two block regions; and
determining the obtained at least two block pixel value differences as the at least two color difference values.

5. The method according to claim 1, wherein said processing the original image using a pre-trained image texture estimation model to obtain a noise level calibration coefficient map comprises:
performing texture probability estimation on the original image using the pre-trained image texture estimation model to obtain a texture probability estimation map, wherein texture probability estimation values included in the texture probability estimation map correspond one-to-one with the pixel points included in the original image; and
converting the texture probability estimation values included in the texture probability estimation map based on a preset conversion relationship to obtain a noise level calibration coefficient map.

6. The method according to claim 5, wherein said converting the texture probability estimation values included in the texture probability estimation map based on a preset conversion relationship to obtain the noise level calibration coefficient map comprises:
mapping the texture probability estimation values included in the texture probability estimation map to the noise level calibration coefficients using a preset mapping function, to obtain the noise level calibration coefficient map.

7. The method according to claim 6, wherein the mapping function is a monotonically decreasing mapping function;
said mapping the texture probability estimation values included in the texture probability estimation map to the noise level calibration coefficients using a preset mapping function, to obtain the noise level calibration coefficient map, comprises:
for any texture probability estimation value included in the texture probability estimation map, mapping the texture probability estimation value to a first noise level calibration coefficient using the monotonically decreasing mapping function, when the texture probability estimation value indicates that a corresponding pixel point is located in a texture region; and mapping the texture probability estimation value to a second noise level calibration coefficient when the texture probability estimation value indicates that the corresponding pixel point is located in a flat region, wherein the first noise level calibration coefficient is smaller than the second noise level calibration coefficient.

8. The method according to claim 5, wherein the image texture estimation model includes an image partitioning module, a feature extraction module, an encoder, a low-resolution probability estimation module, and an upsampling module;
said performing texture probability estimation on the original image using the pre-trained image texture estimation model to obtain a texture probability estimation map comprises:
partitioning the original image using the image partitioning module to obtain an image patch set;
performing feature extraction on an image patch in the image patch set using the feature extraction module to obtain an image token sequence, wherein an image token in the image token sequence corresponds to one image patch;
encoding the image token sequence using the encoder to obtain an encoded data sequence;
performing texture probability prediction on each piece of encoded data in the encoded data sequence using the low-resolution probability estimation module to obtain a low-resolution texture probability map; and
upsampling the low-resolution texture probability map using the upsampling module to obtain the texture probability estimation map having the same resolution as the original image.

9. The method according to claim 8, wherein the low-resolution probability estimation module includes a fully connected layer and an activation function layer;
said performing texture probability prediction on each piece of encoded data in the encoded data sequence using the low-resolution probability estimation module to obtain a low-resolution texture probability map comprises:
mapping a piece of encoded data in the encoded data sequence to a texture feature estimation value using the fully connected layer; and
converting the obtained texture feature estimation values into low-resolution texture probabilities respectively using the activation function layer to obtain the low-resolution texture probability map.

10. The method according to any one of claims 5 to 9, wherein the image texture estimation model is pre-trained according to the following steps:
acquiring a sample image;
determining annotated texture probability values respectively corresponding to the pixel points in the sample images;
performing texture probability estimation on the sample images using an initial image texture estimation model to obtain predicted texture probability estimation values respectively corresponding to the pixel points in the sample image;
determining an error between the predicted texture probability estimation values and the annotated texture probability values using a preset loss function;
adjusting parameters of the initial image texture estimation model based on the error; and
in a case where the initial image texture estimation model with adjusted parameters satisfies a preset training termination condition, determining the current initial image texture estimation model as the trained image texture estimation model.

11. The method according to claim 10, wherein said determining annotated texture probability values respectively corresponding to the pixel points in the sample images comprises:
partitioning the sample image into blocks to obtain a sample block region set; and
for any sample block region in the sample block region set, determining a ratio of a texture region area in the sample block region to the sample block region, and determining the ratio as the annotated texture probability value of the pixel points included in the sample block region.

12. An image noise level estimation apparatus, comprising:
an acquisition module, configured to acquire an original image to be subjected to noise level estimation;
a first estimation module, configured to perform noise level estimation on the original image to obtain an initial noise level estimation map, wherein the initial noise level estimation map includes initial noise level estimation values respectively corresponding to pixel points in the original image;
a second estimation module, configured to process the original image using a pre-trained image texture estimation model to obtain a noise level calibration coefficient map, wherein noise level calibration coefficients in the noise level calibration coefficient map are used to reduce the noise levels of texture regions in the original image and to increase the noise levels of flat regions in the original image; and
a calibration module, configured to calibrate the noise levels in the initial noise level estimation map using the noise level calibration coefficients included in the noise level calibration coefficient map to obtain a calibrated noise level estimation map.

13. The image noise level estimation apparatus according to claim 12, wherein the second estimation module further comprises:
an estimation unit, configured to perform texture probability estimation on the original image using the pre-trained image texture estimation model to obtain a texture probability estimation map, wherein the texture probability estimation values included in the texture probability estimation map correspond one-to-one with the pixel points included in the original image; and
a conversion unit, configured to convert the texture probability estimation values included in the texture probability estimation map based on a preset conversion relationship to obtain a noise level calibration coefficient map.

14. A computer-readable storage medium, storing a computer program thereon, which, when executed, is used to implement the image noise level estimation method according to any one of claims 1 to 11.

15. An electronic device, comprising:
a processor;
a memory for storing executable instructions of the processor; and
the processor, configured to read the executable instructions from the memory, and execute the instructions to implement the image noise level estimation method according to any one of claims 1 to 11.
